# EUROPÄISCHE PATENTSCHRIFT

(11) **EP 1 314 703 B1**
(45) Veröffentlichungstag und Bekanntmachung des Hinweises auf die Patenterteilung: **02.05.2007**
(21) Anmeldenummer: 02021894.7
(22) Anmeldetag: 01.10.2002
(51) Int. Cl.: C03B 33/03, C03B 33/07, B65G 49/06, C03B 33/027

(54) **Verbundglasschneidanlage und Verfahren zum Schneiden von Verbundglas**
Apparatus to cut laminated glass and method
Appareil de découpe de verre feuilleté et procédé

(30) Priorität: 26.11.2001 DE 10157833
(43) Veröffentlichungstag der Anmeldung: 28.05.2003
(60) Teilanmeldung: 05013575.5
(73) Patentinhaber: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Patentanwälte Dr. Solf & Zapf

(56) Entgegenhaltungen:
- EP-A- 0 835 847
- EP-A- 1 118 592
- DE-A- 1 471 967
- DE-A- 3 230 554
- DE-C- 19 822 282
- PATENT ABSTRACTS OF JAPAN Bd. 1996, Nr. 10, 31. Oktober 1996 (1996-10-31) & JP 8 143323 A (ASAHI GLASS CO LTD), 4. Juni 1996 (1996-06-04)

## Beschreibung

Die Erfindung betrifft eine Verbundglasschneidanlage nach dem Oberbegriff des Anspruchs 1 sowie ein Verfahren zum Positionieren einer Verbundglastafel auf der Verbundglasschneidanlage.

Unter Verbundglas versteht man eine aus zwei Glasplatten ausgebildete Scheibe, wobei eine erste innere Platte aus einem üblicherweise unbeschichteten Glas besteht und eine zweite äußere Platte aus einem insbesondere beschichteten, insbesondere mit einer Wärmeschutzschicht versehenen Glas besteht. Die beiden Glasplatten sind mit einer Folie miteinander verklebt.

Um zwei derart miteinander verbundene Rohglasplatten in gebrauchsfähige Formate zu zerschneiden, werden Verbundglasschneidanlagen verwendet.

Eine bekannte Verbundglasschneidanlage 200 (Fig. 19) besitzt eine Verfahrbrücke 201, einen Auflagetisch 202 sowie eine Schneidbrücke 203. An der Verfahrbrücke 201 sind zur Schneidbrücke 203 hin Greifer 204 angeordnet, deren Greifermaul eine Verbundglasscheibe 205 klemmen kann. Da die Scheibe 205 auf dem Auflagetisch 202 aufliegt, müssen untere Klemmbacken der Greifer 204 in Nuten 206 im Auflagetisch 202 laufen. Mit den Greifern 204 kann die Scheibe 205, nachdem sie mit geeigneten Transportmitteln wie Transportrollen oder Transportbändern auf den Auflagetisch 202 gefördert wurde oder manuell mit Aufstellarmen 207 aufgelegt wurde, gegriffen und auf die Schneidbrücke 203 hingeschoben werden.

Eine derartige Verbundglasschneidanlage ist beispielsweise auch aus der DE 32 30 554 A1 bekannt. Nach dem Schneiden bzw. Ritzen mit einer Schneidbrücke werden die Glasscheiben entlang der Ritzlinie geknickt, um einen durchgehenden Riss im Bereich der Ritzlinie zu erzeugen. Anschließend oder dabei werden die Glasplatten auseinandergezogen und die Folie im Spalt durch Hitzeeinwirkung abgeschmolzen bzw. getrennt. Bei derartigen bekannten Verbundglasschneidanlagen ist von Nachteil, dass sie neben einer erheblichen Baulänge eine aufwendige Transporttechnik erfordern, wobei die Verbundglasscheiben nur entlang gerader Linien parallel zu den Tischkanten bzw. Glaskanten schneidbar und trennbar sind.

In der EP 1 118 592 A1 wird eine Vorrichtung zum Schneiden von Verbundglastafeln beschrieben, die einen Auflagetisch zum Auflegen von Verbundglastafeln und eine Verbundglasschneideinrichtung aufweist, wobei die Verbundglasschneideinrichtung eine über die Breite des Auflagetisches auf Höhe einer Seite des Auflagetisches sich erstreckende Schneidbrücke aufweist. Die Schneidbrücke dient zum Schneiden oder Ritzen der Verbundglastafel. Des weiteren weist die Vorrichtung gemäß der EP 1 118 592 A1 eine über dem Auflagetisch zur Schneidbrücke gegenläufig hin- und zurückfahrbar angeordnete Verfahr- bzw. Positionierbrücke zum Verschieben und Positionieren der Verbundglastafel auf dem Auflagetisch auf, wobei die Positionierbrücke einen um eine zur Verbundglastafel senkrechte Hochachse drehbaren Sauggreifer aufweist, mit dem die Verbundglastafel von oben gegriffen wird und der zum Drehen, Ausrichten und Verschieben der Verbundglastafel auf dem Auflagetisch dient, u. a. um diese auch entlang von abgewinkelten und gebogenen Linien schneiden zu können.

Aufgabe der Erfindung ist es, eine Verbundglasschneidanlage zu schaffen, die kurz und bezüglich der Transporttechnik einfach aufgebaut ist und mit der beliebige Schnitte ausgeführt werden können. Zudem ist es Aufgabe der Erfindung, ein einfaches und schnelles Verfahren zum Positionieren von Verbundglastafeln in einer Verbundglasschneidanlage anzugeben.

Die Aufgaben werden mit einer Verbundglasschneidanlage mit den Merkmalen des Anspruchs 1 und einem Verfahren mit den Merkmalen des Anspruchs 16 gelöst. Vorteilhafte Weiterbildungen sind in den jeweils abhängigen Unteransprüchen gekennzeichnet.

Erfindungsgemäß wird eine Positionierbrücke vorgesehen, die beidseitig Greifer besitzt, so dass die Glasplatten sowohl gezogen als auch geschoben werden können. Hierdurch ergibt sich in überraschender Weise eine signifikante Verkürzung der Baulänge. Ferner kann eine Glasplatte aktiv auf den Auflagetisch gezogen werden, so dass vorgeschaltete Transporteinrichtungen vereinfacht oder weggelassen werden können. Ferner wird eine genauere Positionierung und Kantenparallelität erzielt.

Die Erfindung sieht ferner vor, die Schneid- bzw. Ritzeinrichtungen an der Schneidbrücke drehbar und entlang der Schneidbrücke verfahrbar auszubilden. In Verbindung mit der Positionierbrücke sind hiermit beliebige, auch runde oder gekrümmte Schnitte möglich. Dies insbesondere auch automatisiert rechnergesteuert.

Die Erfindung wird anhand einer Zeichnung beispielhaft näher erläutert. Es zeigen dabei:
- Fig. 1: einen erfindungsgemäßen Doppelgreifer an einer verfahrbaren Positionierbrücke in einer schematischen Seitenansicht;
- Fig. 2: einen Doppelgreifer nach Fig. 1 in einer schematischen Draufsicht;

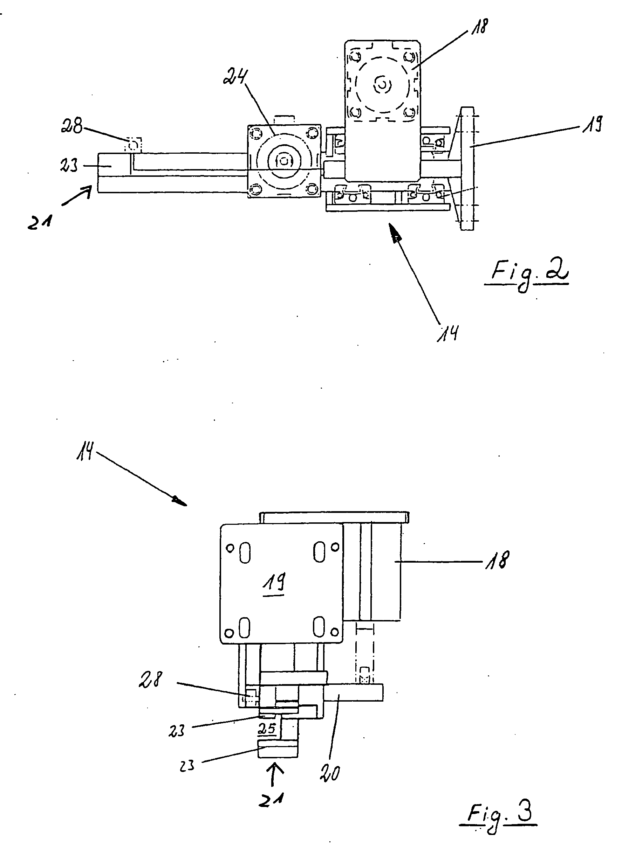

- Fig. 3: einen Doppelgreifer nach Fig. 1 in einer schematischen brückenseitigen Ansicht normal zu den Ansichten nach Fig. 1 und 2;
- Fig. 4: eine erfindungsgemäße Verbundglasschneidanlage in einer schematisierten Draufsicht, wobei eine Glastafel mittels vorderer Greifer geschoben wird;
- Fig. 5: eine Verbundglasschneidanlage in einer Draufsicht mit einer auf die Aufstellarme aufgelegten Glasplatte;
- Fig. 6: eine Verbundglasschneidanlage nach Fig. 5 mit einer in einer ersten Schneidposition verfahrenen Scheibe oder Platte;
- Fig. 7: eine Verbundglasschneidanlage nach Fig. 5 mit einer durch die Positionierbrücke zurückgezogenen geschnittenen Platte, wobei ein abgeschnittenes Plattenstück hinter der Schneidbrücke verbleibt;

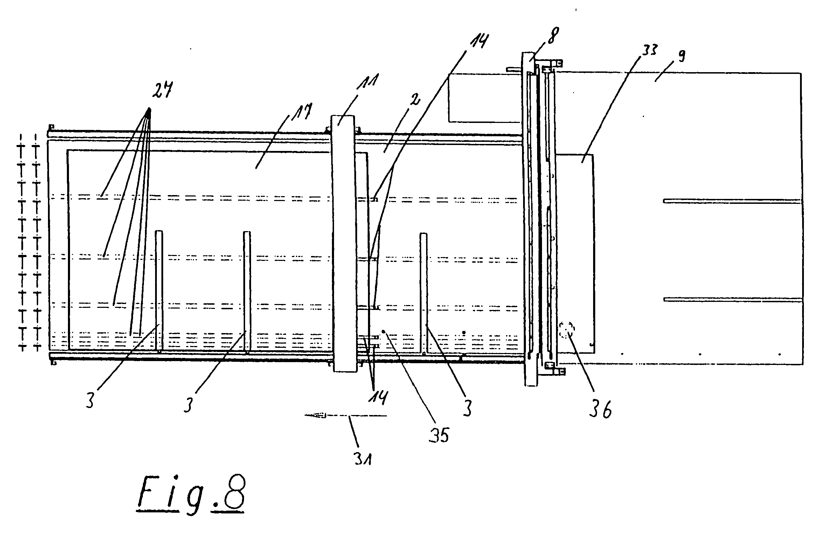

- Fig. 8: die Verbundglasschneidanlage nach Fig. 7, wobei die Positionierbrücke über die Scheibe gefahren und die Scheibe mit den rückwärtigen Greifern geklemmt und von der Schneidbrücke weggeschoben wird;
- Fig. 9: eine Verbundglasschneidanlage nach Fig. 8, bei der die geschnittenen Plattenteile mittels einer Drehung zum weiteren Schneiden um 90° gedreht werden;
- Fig. 10: eine Verbundglasschneidanlage nach Fig. 9 nach erfolgtem Schnitt, wobei die Positionierbrücke die kleine Glastafel für den nächsten Schnitt positioniert;
- Fig. 11: eine Verbundglasschneidanlage nach Fig. 10, wobei die große Glastafel für den nächsten Schnitt mit hinteren Greifern vorgezogen wird;
- Fig. 12: eine Verbundglasschneidanlage nach Fig. 11, wobei die Glastafel von der Positionierbrücke überfahren und dann geschoben wird;

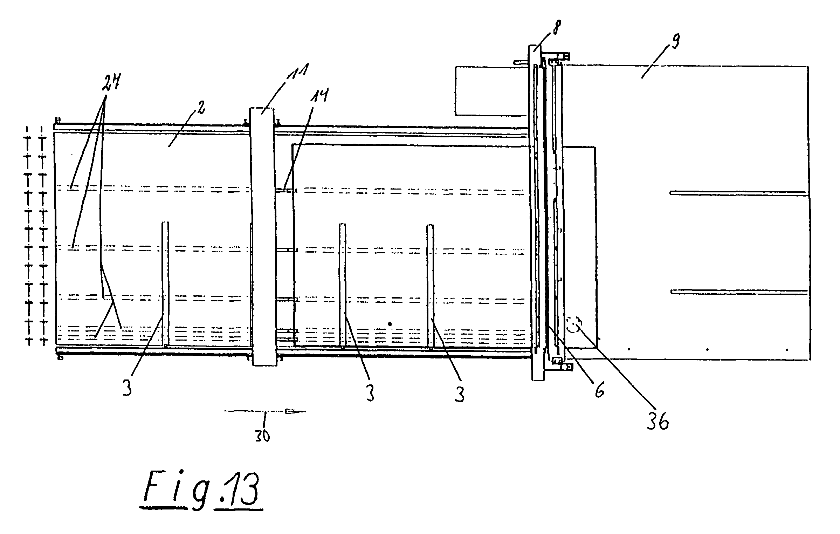

- Fig. 13: eine Verbundglasschneidanlage nach Fig. 12 mit einer in Schneidposition geschobenen großen Glastafel;

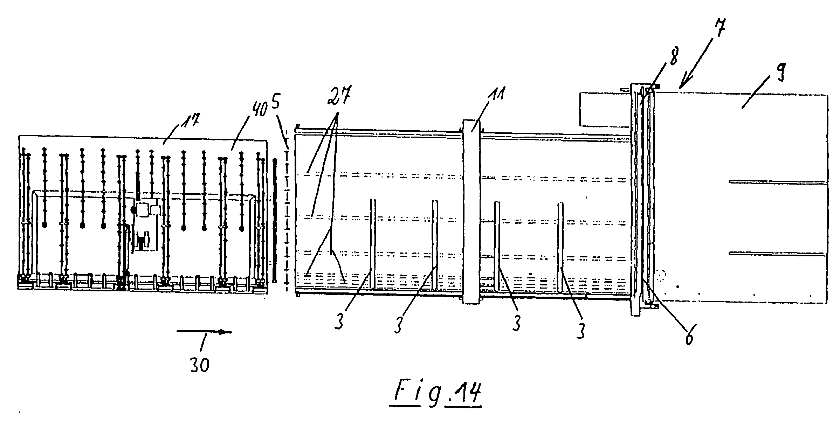

- Fig. 14: eine Verbundglasschneidanlage nach Fig. 4 mit einem vorgeschalteten Beschicker;
- Fig. 15: die Verbundglasschneidanlage nach Fig. 14 mit einer teilweise auf den Auflagetisch geförderten Glasplatte;
- Fig. 16: die Verbundglasschneidanlage nach Fig. 15, wobei die Glasplatte von der Positionierbrücke gegriffen ist;
- Fig. 17: die Verbundglasschneidanlage nach Fig. 16, wobei die Glasplatte von der Positionierbrücke zur Schneidbrücke vom Beschicker gezogen wird;
- Fig. 18: eine erfindungsgemäße Verbundglasschneidanlage in einer Draufsicht für einen Vergleich der Baulänge;
- Fig. 19: eine Verbundglasschneidanlage nach dem Stand der Technik.

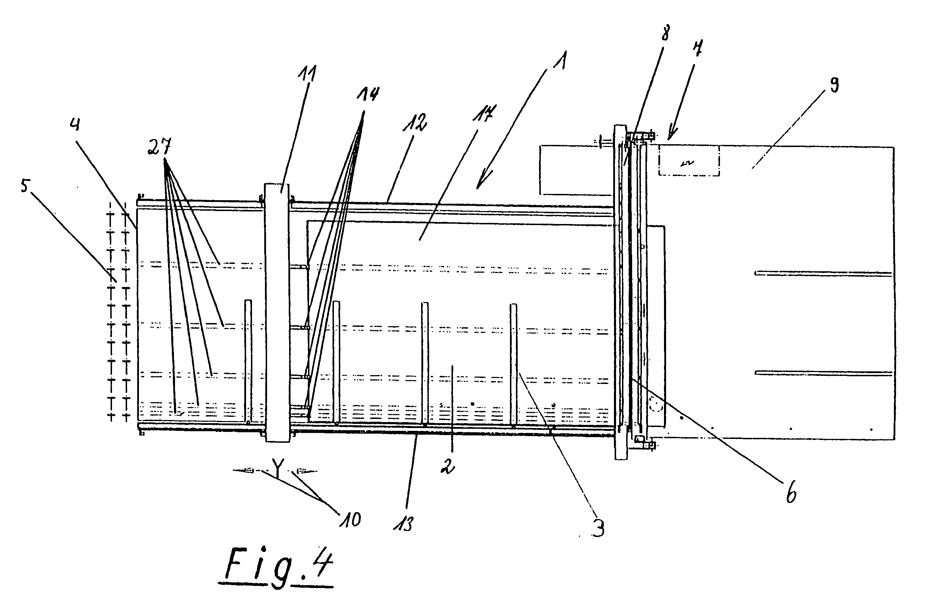

Eine erfindungsgemäße Verbundglasschneidanlage 1 (Fig. 4) besitzt als Auflagetisch vorzugsweise einen Luftkissenbrückentisch 2 mit an sich bekannten Aufstellarmen 3 für eine manuelle Beschickung. An einer Schmalseite bzw. Beschickungsseite 4 des Luftkissenbrückentisches 2 ist im Luftkissenbrückentisch 2 eine Beschickungseinheit (angedeutet) 5 vorhanden. An der gegenüberliegenden Schmalseite 6 (Schneidseite) ist eine Verbundglasschneideinrichtung 7 vorhanden. Die Verbundglasschneideinrichtung 7 besitzt eine über die Breite des Luftkissenbrückentisches 2 auf Höhe der Schmalseite 6 sich erstreckende Schneidbrücke 8 sowie einen Bearbeitungstisch 9, der mit einem Spalt (nicht gezeigt) an die Schmalseite 6 angesetzt ist. Zwischen der Schmalseite 4 und der Schneidbrücke 8 ist in Tischlängsrichtung (Y-Richtung) 10 eine Positionierbrücke 11 verfahrbar angeordnet. Die Positionierbrücke 11 überspannt den Luftkissenbrückentisch 2 und ist an dessen Längskanten 12, 13 verschieblich antreibbar gelagert.

An der Positionierbrücke 11 sind eine Mehrzahl von Greifeinrichtungen 14 ausgebildet. Die Greifeinrichtungen 14 sind bezüglich der Längserstreckung der Positionierbrücke 11 mit unregelmäßigen Abständen zueinander angeordnet, wobei zum Greifen von unterschiedlich breiten Glastafeln bzw. -platten 17 die Abstände zwischen den Greifeinrichtungen 14 von der Längskante 13 zur Längskante 12 hin weiter werden. Die Abstände zwischen den Greifeinrichtungen 14 sind insbesondere auf Standardformate abgestimmt.

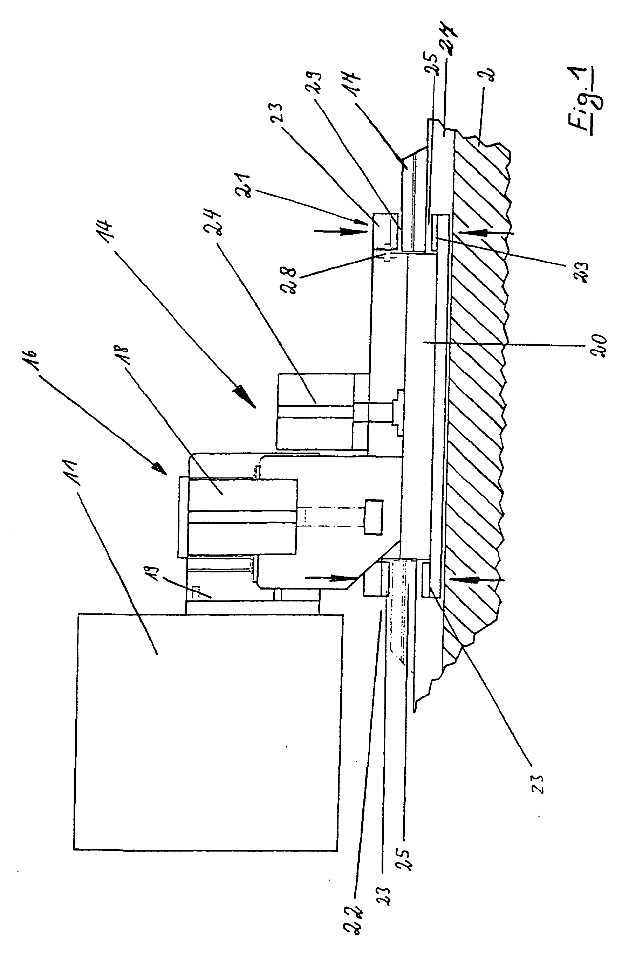

Die Greifeinrichtungen 14 (Fig. 1) sind an einer der Schneidbrücke 8 zugewandten Fläche oder Wandung 15 an der Positionierbrücke 11 angeordnet, insbesondere angeschraubt. Der Wandung 15 benachbart ist eine Hubeinrichtung 16 zum Anheben der Greifeinrichtung 14 über das Niveau einer Glastafel 17 vorhanden. Die Hubeinrichtung 16 ist beispielsweise eine mit einer pneumatischen Kolbenzylindereinheit 18 zwischen einer Befestigungseinrichtung 19 und der übrigen Greifeinrichtung 14 angeordnete Hubeinrichtung 16.

Die Greifeinrichtung 14 weist einen länglichen Greiferträger 20 auf. Der Greiferträger 20 ist mit der Hubeinrichtung 16 anhebbar und absenkbar verbunden. An dem Greiferträger 20 sind endseitig Greifer 21, 22 mit Greifpratzen 23 ausgebildet, wobei ein Greifer 21 der Positionierbrücke 11 abgewandt ist und ein Greifer 22 der Positionierbrücke 11 zugewandt und schräg unterhalb von dieser angeordnet ist.

Die Greifer 21, 22 sind in an sich bekannter Weise ausgebildet und werden mit einer Betätigungseinrichtung 24, insbesondere einer Kolbenzylindereinheit 24 betätigt. Für jeden Greifer 21, 22 kann eine Betätigungseinrichtung 24 vorhanden sein, es können aber auch beide Greifer 21, 22 mit einer einzigen Betätigungseinrichtung 24 betätigt werden.

Zum Schließen und Öffnen von durch die Greifpratzen 23 gebildeten Greifmäulern 25 werden beide Pratzen 23 aufeinander zugefahren. Eine untere Pratze 23 befindet sich somit zwangsläufig unterhalb des Niveaus einer auf den Tisch 2 aufliegenden Scheibe. Der Tisch 2 besitzt entlang seiner Längserstreckung fluchtend mit der Bewegungsbahn der Greifereinrichtungen 14 Nuten 27. Benachbart zu den Greifern 21, 22 sind an der Greifeinrichtung 14 Sensoren 28 vorhanden. Die Sensoren 28 dienen der Erfassung einer definierten Greiftiefe. Die Greiftiefe ist dabei so bemessen, dass die Pratzen 23 eine Tafel 17 nur in entschichteten Randbereichen 29 greifen.

Im folgenden wird die Funktionsweise der erfindungsgemäßen Vorrichtung erläutert:

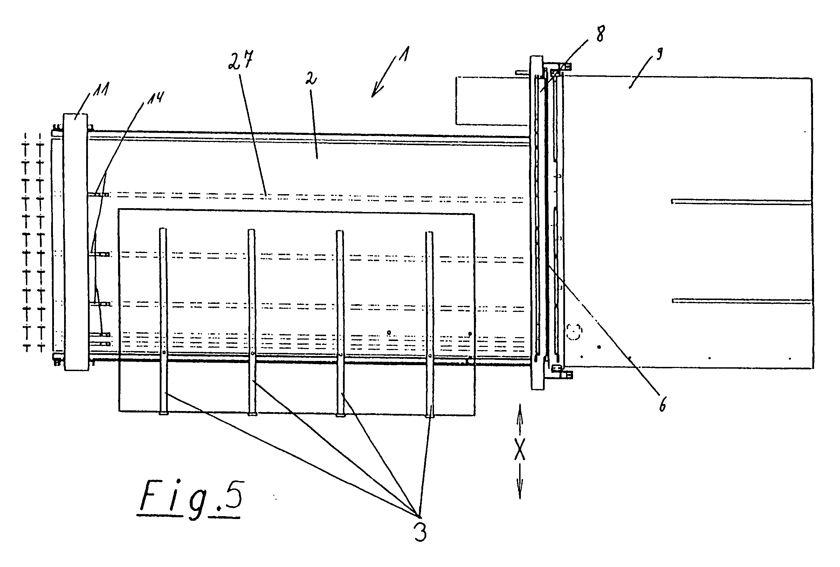

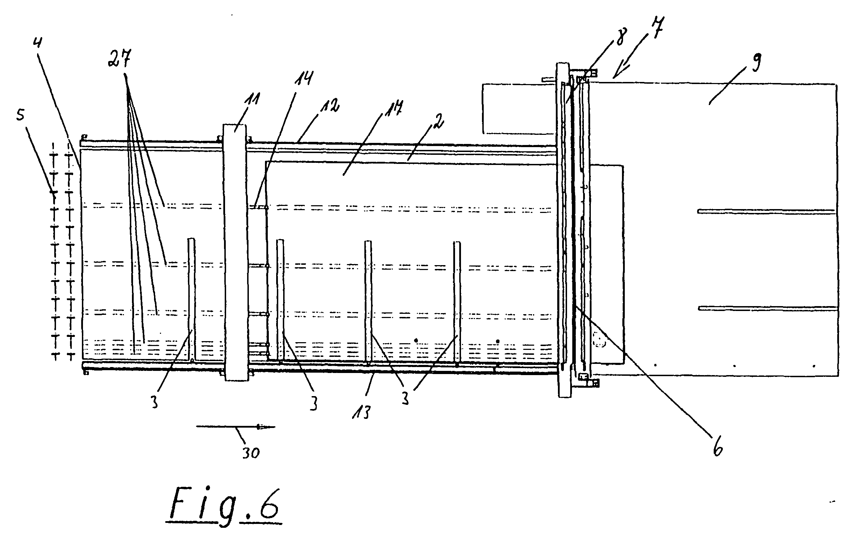

Eine Glastafel 17 kann über die Aufstellarme 3 (Fig. 5) auf den Luftkissenbrückentisch 2 aufgelegt werden, so dass die Glastafel 17 zwischen die Positionierbrücke 11 und die Schneidbrücke 8 gelangt. Die Glastafel 17 wird mit den vorderen Greifern 21 (Fig. 6) im entschichteten Randbereich gegriffen und entlang der Förderrichtung (Pfeil 30) unter die Schneidbrücke 8 gefördert, bis bezogen auf die Förderrichtung 30 hinter der Schneidbrücke 8 eine Scheibenfläche zu liegen kommt, die einer abzuschneidenden Scheibenfläche entspricht.

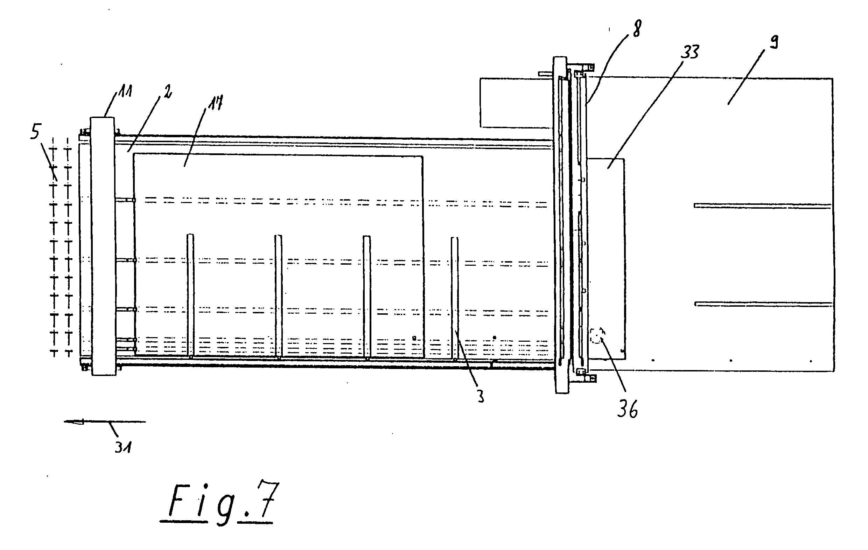

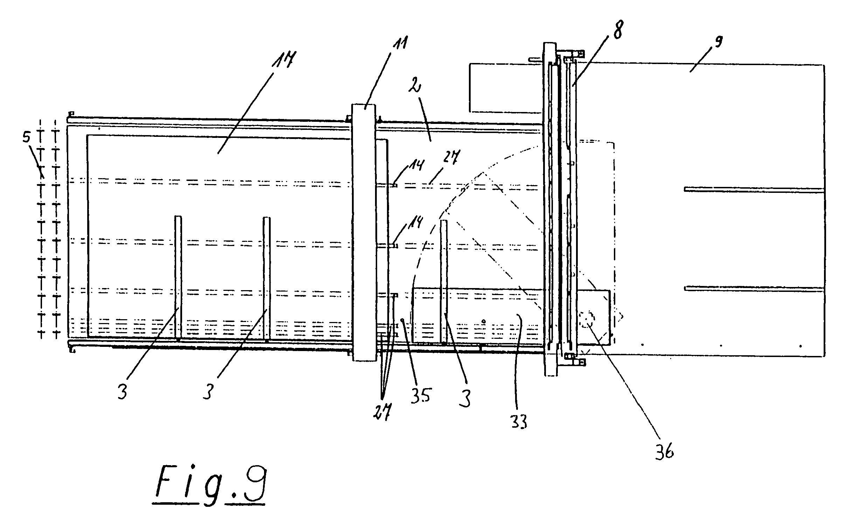

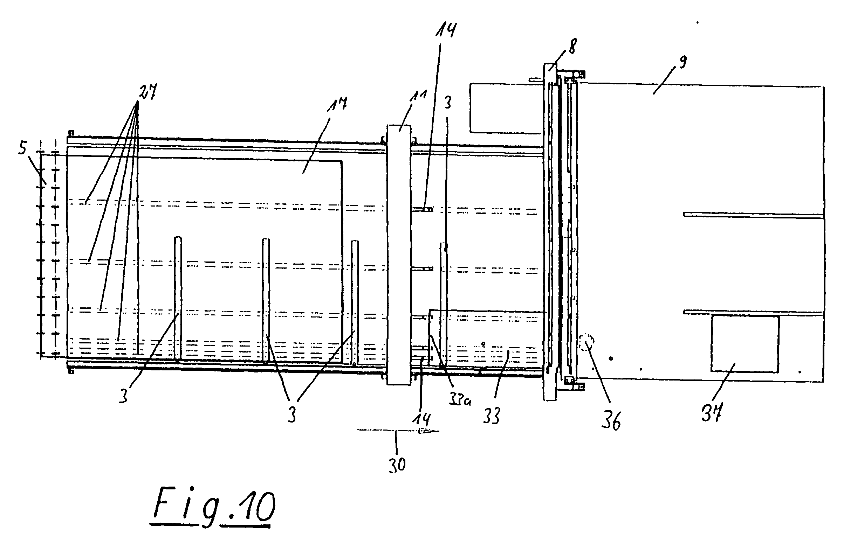

Nach dem Schneiden (Fig. 7) wird die Glasplatte von der Positionierbrücke und den immer noch an der Glastafel angreifenden vorderen Greifern 21 entgegen der Förderrichtung (Pfeil 31) von der Schneidbrücke 8 weggezogen. Gegenüberliegend von der Positionierbrücke 11 verbleibt ein geschnittener Glastafelabschnitt 33 auf dem Bearbeitungstisch 9. Für nachfolgende Schneidschritte an dem geschnittenen Glastafelabschnitt 33 muss die Glastafel 17 von der Schneidbrücke 8 weg verfahren werden, wobei in einem hinteren Anschlag der Positionierbrücke 11 (Fig. 7) die vorderen Greifer 21 die Glastafel 17 loslassen und anschließend über die Glastafel 17 auf die Schneidbrücke 8 zu verfahren werden, wobei die Greifer 21, 22 mit der Einrichtung 16 über die Glastafel 17 angehoben sind. Ist die Positionierbrücke 11 über die Glastafel 17 hinweggefahren, werden die Greifeinrichtungen 14 wieder in die Nuten 27 abgesenkt und die Glastafel 17 mit den rückwärtigen Greifern 22 in entschichteten Randbereichen gegriffen und weiter entlang der Gegenförderrichtung (Pfeil 31) von der Schneidbrücke 8 weggefördert, bis ein Sensor 35 frei wird. Um den geschnittenen Glastafelabschnitt 33 weiter zu zerteilen, wird er von einem Drehsaugteller 36 von unten angesaugt und anschließend um 90° unter der Schneidbrücke 8 hindurch auf den Luftkissenbrükentisch 2 gedreht (Fig. 9). Um den Glastafelabschnitt 33 in die jeweiligen Schneidpositionen zu fahren, um ihn in kleinere Tafeln oder Scheiben 37 zu zerteilen, wird die Glastafel 17 von den hinteren Greifern 22 losgelassen und die Positionierbrücke 11 auf den Glastafelabschnitt 33 zugefahren und mit einer Anzahl von Greifern 21 an seiner der Schneidbrücke 8 abgewandten Schmalseite 33a mit Greifern 21 gegriffen, wobei die Anzahl der Greifer 21 auf die Breite des Glastafelabschnitts 33 bzw. die Länge der Schmalseite 33a abgestimmt ist. Anschließend wird die Positionierbrücke mit dem Glastafelabschnitt 33 entlang der Förderrichtung 30 unter die Schneidbrücke 8 gefahren und von dem Glastafelabschnitt 33 ein entsprechendes Stück 37 abgeschnitten und weiter auf den Bearbeitungstisch 9 gefördert (Fig. 10).

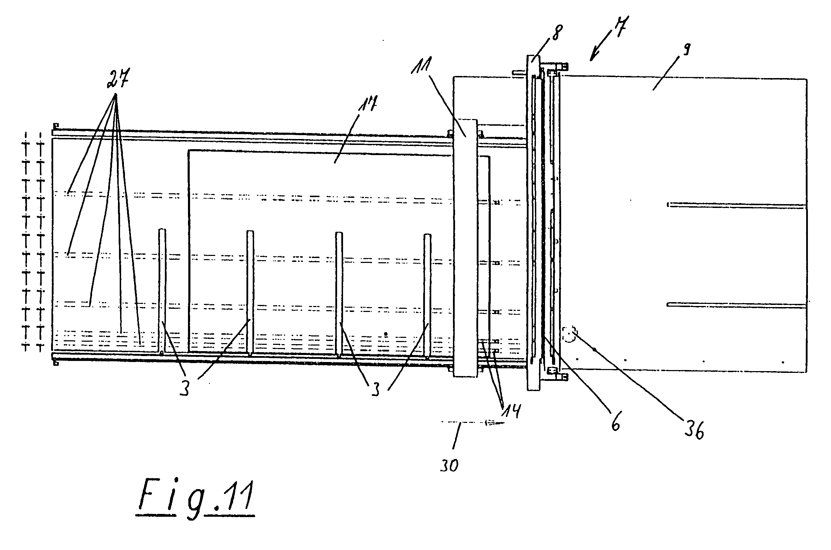

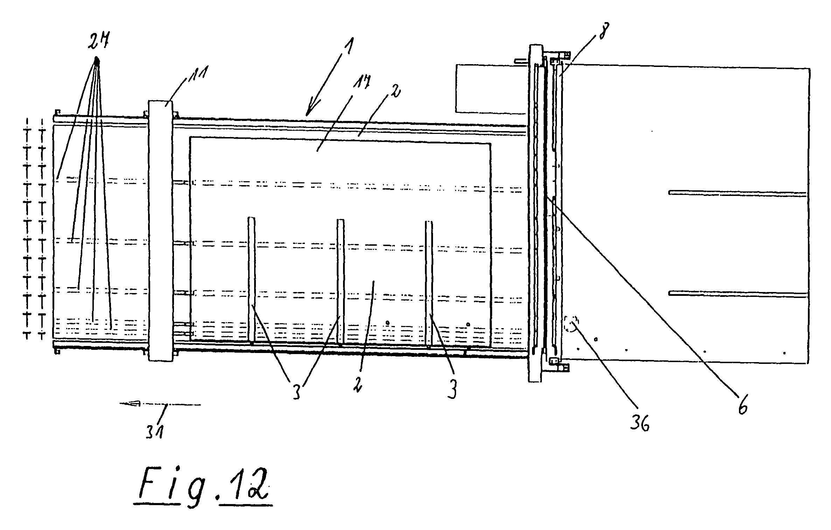

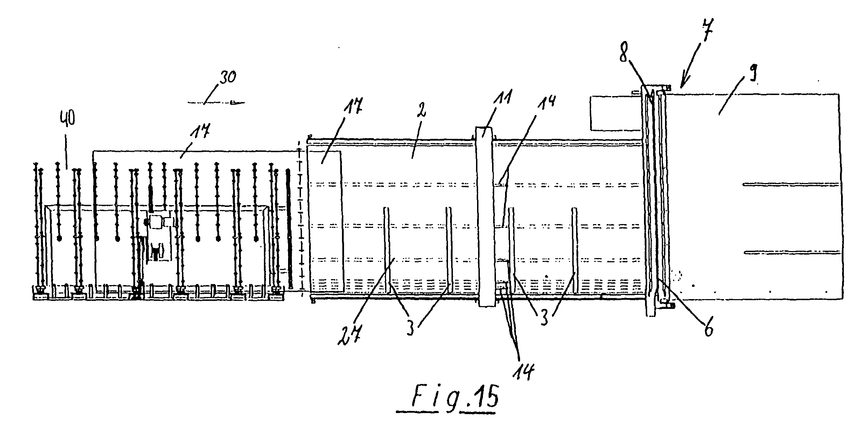

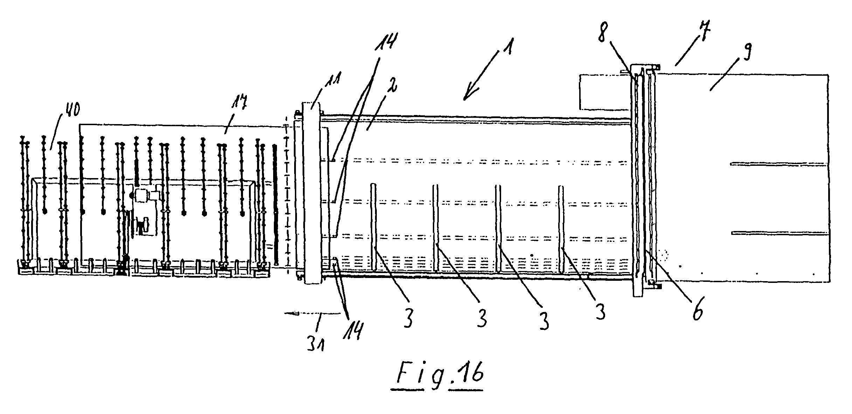

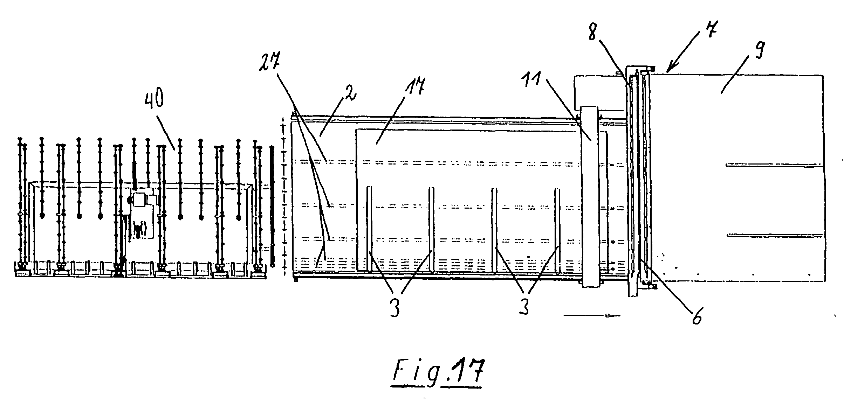

Nachdem der Glastafelabschnitt 33 in Stücke 37 zerschnitten worden ist, wird zum weiteren Zerschneiden der Glastafel 17 die Positionierbrücke 11 gegen die Förderrichtung (Pfeil 31) zur Tafel 17 gefahren und die Tafel 17 mit hinteren Greifern 22 gegriffen und zur Schneidbrücke 8 entlang der Förderrichtung 30 vorgezogen (Fig. 11). Um die Glastafel 17 unter der Schneidbrücke 8 zu positionieren, wird die Positionierbrücke 11 über die Glastafel 17 in Gegenförderrichtung 31 verfahren, wobei die gesamte Greifeinrichtung 14 mit der Einrichtung 16 angehoben ist. In Gegenförderrichtung 31 hinter der Tafel 17 wird die Greifereinrichtung 14 wieder in die Nuten 27 abgesenkt und auf die Tafel 17 zugefahren, bis die vorderen Greifer 21 die Tafel 17 greifen (Fig. 12). Anschließend wird die Glastafel 17 entlang der Förderrichtung 30 wieder unter die Schneidbrücke 8 gefahren, bis ein gewünschtes Plattenstück auf den Bearbeitungstisch 9 hinaussteht. Einer derartigen Schneidanlage kann beispielsweise eine automatische Beschickung 40 vorgeschaltet sein, wobei die automatische Beschickung 40 beispielsweise ein Rollenförderer mit Kipparmen 40 sein kann, der über Rollen eine große Glastafel 17 auf den Luftkissenbrückentisch 2 entlang der Förderrichtung 30 auffördern kann. Die Förderung erfolgt dabei solange (Fig. 15), bis ein Teil der Glastafel 17 vom Rollenförderer 40 auf den Luftkissenbrückentisch 2 gefördert ist. Auf dem Luftkissenbrückentisch 2 (Fig. 16) wird die Positionierbrücke 8 in Gegenförderrichtung 31 auf die Tafel 17 zu verfahren, bis die Greifer 22 die Tafel 17 greifen und anschließend entlang der Förderrichtung 30 auf die Schneidbrücke 8 zu verfahren (Fig. 17).

Bei einer weiteren vorteilhaften Ausführungsform der Erfindung sind an der Schneidbrücke 8 sowohl ober- als auch unterseitig Schneidrädchen angeordnet, die um eine Achse normal zur Fläche der Glastafel 17 drehbar antreibbar sind. Diese Schneidrädchen sind somit in der Lage, nicht nur entlang der Schneidbrücke 8, d.h. quer zur Glastafel 17 zu schneiden, sondern können in jede Richtung schneiden. Zusammen mit der erfindungsgemäß ausgebildeten Positionierbrücke 11 können hierdurch beliebige Konturen geschnitten werden, da abhängig von der Vorschub- oder Rückzuggeschwindigkeit sowie der Vorschubgeschwindigkeit des Schneidrädchens und der Richtung des Schneidrädchens jeder beliebige Schnitt auf einer Tafel 17 durchführbar ist. Hiermit ist es somit erfindungsgemäß erstmals möglich, bei Verbundglas beliebige Konturen vollautomatisiert zu schneiden.

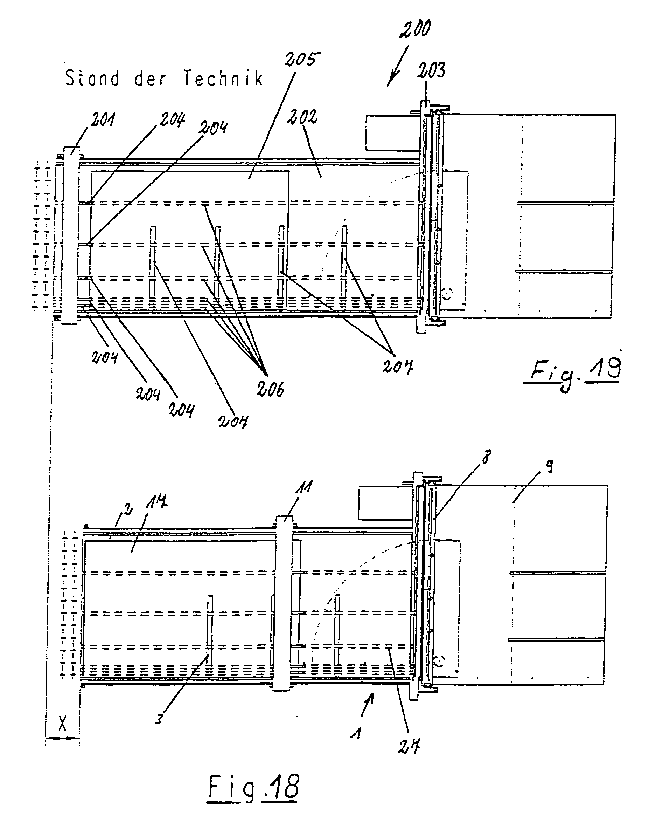

Bei der Erfindung ist von Vorteil, dass sie eine verkürzte Baulänge (Fig. 18, 19) aufweist, wobei durch die spezielle Ausbildung der Greifer das Zuführen einer Glasplatte zu einer Schneideinrichtung und das Wegziehen derselben von der Schneideinrichtung erheblich schneller vonstatten gehen kann, was höhere Taktzeiten erlaubt. Ferner ermöglicht die erfindungsgemäße Verbundglasschneidanlage einen einfacheren Aufbau, da auf dem Luftkissenbrückentisch keine zusätzlichen Förderer benötigt werden.

Darüber hinaus ist von Vorteil, dass bei einem um eine Achse normal zur Glasplattenfläche drehbaren Schneidrädchen in Verbindung mit einer Positionierbrücke, insbesondere rechnergesteuert jede beliebige Kontur mit Verbundglas geschnitten werden kann. Bislang wurden derartige Schnitte manuell erzeugt, wobei die Glasplatte zunächst auf einer Seite geschnitten wurde, dann gedreht wurde und dann auf der anderen Seite geschnitten wurde. Dies hatte erhebliche Ungenauigkeiten und einen sehr großen Zeitaufwand zur Folge, welche bzw. welcher mit der Erfindung vermieden wird.

## Patentansprüche

1. Vorrichtung zum Schneiden einer Verbundglastafel (17)
- mit einem Auflagetisch (2) zum Auflegen von Verbundglastafeln (17), der zwei sich gegenüberliegende Schmalseiten (4,6) aufweist, von denen die eine Schmalseite (6) eine Schneidseite (6) ist, und
- mit einer Verbundglasschneideinrichtung (7), die eine über die Breite des Auflagetisches (2) auf Höhe der Schneidseite (6) sich erstreckende Schneidbrücke (8), an der ober- und unterseitig der zu bearbeitenden Verbundglastafel (17) zumindest je ein Schneidwerkzeug zum Schneiden oder Ritzen der Verbundglastafel (17) vorhanden ist und einen Bearbeitungstisch (9), der an die Schneidseite (6) angesetzt ist, aufweist,
- einer über dem Auflagetisch (2) entlang einer Tischlängsrichtung (10) des Auflagetisches (2) zur Verbundglasschneideinrichtung (7) gegenläufig hin- und zurückfahrbar angeordneten Positionierbrücke (11) zum Verschieben und Positionieren der Verbundglastafel (17) auf dem Auflagetisch (2) mit zumindest einer Greifeinrichtung (14) mit zumindest einem vorderen, klemmenden Greifer (21), dessen durch seine Greifpratzen (23) gebildetes Greifmaul (25) zum Greifen der Verbundglastafel (17) im hinteren, der Verbundglasschneidanlage (7) abgewandeten Randbereich, zur Schneidbrücke (8) hin weist,
**dadurch gekennzeichnet, dass**
an der Greifeinrichtung (14) zumindest ein hinterer, klemmender Greifer (22), dessen durch seine Greifpratzen (23) gebildetes Greifmaul (25) von der Schneidbrücke (8) weg weist, vorhanden ist, so dass die Verbundglastafel (17) auch in ihrem vorderen, der Verbundglasschneidanlage (7) zugewandten Randbereich greifbar ist und sowohl gezogen als auch geschoben werden kann.

2. Vorrichtung nach Anspruch 1,
**dadurch gekennzeichnet, dass**
an der Positionierbrücke (11) eine Mehrzahl von Greifeinrichtungen (14) vorhanden sind, wobei an der Positionierbrücke (11) entlang der Längserstreckung des Auflagetisches (2) an jeder Greifeinrichtung (14) zumindest ein vorderer, klemmender Greifer (21) und zumindest ein hinterer, klemmender Greifer (22) vorhanden sind.

3. Vorrichtung nach Anspruch 1 oder 2,
**dadurch gekennzeichnet, dass**
die Schneidwerkzeuge um eine Achse senkrecht zur Schneidrichtung und senkrecht zur Verbundglastafelebene frei oder angetrieben drehbar sind und entlang der Schneidbrücke (8) quer zur Förderrichtung einer Verbundglastafel (17) bewegbar sind, so dass beliebige Schnittkonturen geschnitten werden können.

4. Vorrichtung nach Anspruch 2 und/oder 3,
**dadurch gekennzeichnet, dass**
die Greifeinrichtungen (14) bezüglich der Längserstreckung der Positionierbrücke (11) mit unregelmäßigen Abständen zueinander angeordnet sind, wobei zum Greifen von unterschiedlich breiten Verbundglastafeln (17) die Abstände zwischen den Greifeinrichtungen (14) von einer Längskante (13) des Auflagetisches (2) zu einer gegenüberliegenden Längskante (12) hin weiter oder enger werden.

5. Vorrichtung nach Anspruch 4,
**dadurch gekennzeichnet, dass**
die Abstände zwischen den Greifeinrichtungen (14) auf Standardformate von Verbundglastafeln (17) abgestimmt sind.

6. Vorrichtung nach einem der vorhergehenden Ansprüche,
**dadurch gekennzeichnet, dass**
die Greifeinrichtungen (14) eine Hubeinrichtung (16) zum Anheben der Greifeinrichtung (14) über das Niveau einer Verbundglastafel (17) aufweisen, so dass die Positionierbrücke (11) mit angehobenen Greifeinrichtungen (14) die Verbundglastafel (17) überfahren kann.

7. Vorrichtung nach Anspruch 6,
**dadurch gekennzeichnet, dass**
die Hubeinrichtung (16) eine pneumatische oder hydraulische Kolbenzylindereinheit (18) oder eine elektromotorische Verstelleinrichtung aufweist, die zwischen einer Befestigungseinrichtung (19) und der übrigen Greifeinrichtung (14) angeordnet ist.

8. Vorrichtung nach Anspruch 6 und/oder Anspruch 7,
**dadurch gekennzeichnet, dass**
die Greifeinrichtung (14) einen länglichen Greiferträger (20) aufweist, wobei der Greiferträger (20) mit der Hubeinrichtung (16) anhebbar und absenkbar verbunden ist, wobei an dem Greiferträger (20) endseitig die Greifer (21, 22) ausgebildet sind.

9. Vorrichtung nach einem der vorhergehenden Ansprüche,
**dadurch gekennzeichnet, dass**
die Greifer (21, 22) je eine Betätigungseinrichtung (24) zum Öffnen und Schließen der Greifmäuler (25) aufweisen.

10. Vorrichtung nach Anspruch 9,
**dadurch gekennzeichnet, dass**
die Betätigungseinrichtung (24) eine pneumatische oder hydraulische Kolbenzylindereinheit (24) oder eine elektromotorische Stelleinheit (24) ist.

11. Vorrichtung nach einem der vorhergehenden Ansprüche,
**dadurch gekennzeichnet, dass**
jeder Greifer (21, 22) eine eigene Betätigungseinrichtung (24) besitzt.

12. Vorrichtung nach einem der Ansprüche 1 bis 10,
**dadurch gekennzeichnet, dass**
die Greifer (21, 22) einer Greifeinrichtung (14) mit einer einzigen Betätigungseinrichtung (24) betätigt werden.

13. Vorrichtung nach einem der Ansprüche 1 bis 12,
**dadurch gekennzeichnet, dass**
der Auflagetisch (2) entlang seiner Längserstreckung fluchtend mit der Bewegungsbahn der Greifeinrichtungen (14) Nuten (27) für unter dem Niveau einer Verbundglastafel (17) angeordnete Teile der Greifeinrichtungen (14) aufweist.

14. Vorrichtung nach einem der Ansprüche 1 bis 13,
**dadurch gekennzeichnet, dass**
benachbart zu den Greifern (21, 22) an der Greifeinrichtung (14) Sensoren (28) vorhanden sind, welche eine definierte Greiftiefe erfassen, wobei der Abstand der Sensoren (28) zur Öffnung der Greifmäuler (25) derart festgelegt ist, dass die Greifpratzen (23) der Greifer (21, 22) eine Verbundglastafel (17) nur in entschichteten Randbereichen (29) ergreifen.

15. Vorrichtung nach einem der vorhergehenden Ansprüche,
**dadurch gekennzeichnet, dass**
dem Auflagetisch (2) eine Beschickereinheit (40) vorgeordnet angeordnet ist, mit der eine Verbundglastafel (17) auf den Auflagetisch (2) förderbar ist, bis die Verbundglastafel (17) von einem Greifer (21) greifbar ist.

16. Verfahren zum Positionieren einer Verbundglastafel (17) auf einem Auflagetisch (2) einer Vorrichtung nach einem oder mehreren der vorhergehenden Ansprüche unter Verwendung dieser Vorrichtung,
**dadurch gekennzeichnet, dass**
die Verbundglastafel (17) zum Verschieben auf dem Auflagetisch (2), nacheinander sowohl an ihrem vorderen, der Verbundglasschneidanlage (7) zugewandten Randbereich als auch an ihrem hinteren, der Verbundglasschneidanlage (7) abgewandten Randbereich gegriffen und sowohl gezogen als auch geschoben wird.

17. Verfahren nach Anspruch 16,
**gekennzeichnet durch**
die folgenden Verfahrensschritte:
a) Greifen der Verbundglastafel (17) mit den vorderen Greifern (21) an ihrem hinteren Randbereich und Schieben entlang einer Förderrichtung (30) unter die Schneidbrücke (8), insbesondere bis, bezogen auf die Förderrichtung (30), hinter der Schneidbrücke (8) eine Scheibenfläche zu liegen kommt, die einer abzuschneidenden Scheibenfläche entspricht
b) wegziehen der Verbundglastafel (17) von der Positionierbrücke mit den immer noch an der Verbundglastafel (17) angreifenden vorderen Greifern (21) entlang einer Gegenförderrichtung (31) von der Schneidbrücke (8) weg
c) Verfahren der Positionierbrücke (11) über die Verbundglastafel (17) zur Schneidbrücke (8) in Förderrichtung (30), wobei insbesondere die gesamte Greifeinrichtung (14) mit der Hubeinrichtung (16) angehoben wird
d) Greifen der Verbundglastafel (17) mit den rückwärtigen Greifern (22) an ihrem vorderen Randbereich und weiter Schieben entlang der Gegenförderrichtung (31) von der Schneidbrücke (8) weg

18. Verfahren nach Anspruch 17,
**dadurch gekennzeichnet, dass**
die Verbundglastafel (17) vor dem Positionieren zum Schneiden zunächst mit den hinteren Greifern (22) an ihrem vorderen Randbereich gegriffen und zur Schneidbrücke (8) entlang der Förderrichtung (30) vorgezogen wird und dann die Positionierbrücke (11) über die Verbundglastafel (17) in Gegenförderrichtung (31) verfahren wird, wobei insbesondere die gesamte Greifeinrichtung (14) mit der Hubeinrichtung (16) angehoben wird.

19. Verfahren nach einem oder mehreren der Ansprüche 16 bis 18,
**dadurch gekennzeichnet, dass**
die Greifeinrichtungen (14) vor dem Greifen der Verbundglastafel (17) jeweils in die Nuten (27) abgesenkt werden.

## Claims

1. Apparatus to cut a laminated glass sheet (17),
- with a supporting table (2) for placing laminated glass sheets (17) on, the supporting table having two opposite narrow sides (4, 6) of which the one narrow side (6) is a cutting side (6), and
- with a laminated-glass-cutting device (7) which has a cutting bridge (8), which extends over the width of the supporting table (2) level with the cutting side (6) and on which, on the upper and lower sides of the laminated glass sheet (17) to be machined, there is at least one cutting tool in each case for cutting or scoring the laminated glass sheet (17), and a machining table (9), which is attached to the cutting side (6),
- with a positioning bridge (11), which is arranged in a manner such that it is movable to and fro over the supporting table (2) along a longitudinal direction (10) of the supporting table (2) in an opposed manner to the laminated-glass-cutting device (7), for displacing and positioning the laminated glass sheet (17) on the supporting table (2), with at least one gripping device (14) having at least one front, clamping gripper (21), the gripping mouth (25) of which, which is formed by its gripping claws (23), points towards the cutting bridge (8) in order to grip the laminated glass sheet (17) in the rear edge region facing away from the laminated-glass-cutting installation (7), **characterized in that** there is at least one rear, clamping gripper (22), the gripping mouth (25) of which, which is formed by its gripping claws (23), points away from the cutting bridge (8), on the gripping device (14), so that the laminated glass sheet (17) can also be gripped in its front edge region facing the laminated-glass-cutting installation (7), and can both be pulled and pushed.

2. Apparatus according to Claim 1, **characterized in that** there is a plurality of gripping devices (14) on the positioning bridge (11), with there being on each gripping device (14) on the positioning bridge (11) along the longitudinal extent of the supporting table (2) at least one front, clamping gripper (21) and at least one rear, clamping gripper (22).

3. Apparatus according to Claim 1 or 2, **characterized in that** the cutting tools can be rotated freely or in a driven manner about an axis perpendicular to the cutting direction and perpendicular to the laminated glass sheet plane and can be moved along the cutting bridge (8) transversely to the conveying direction of a laminated glass sheet (17), with the result that any desired cutting contours can be cut.

4. Apparatus according to Claim 2 and/or 3, **characterized in that** the gripping devices (14) are arranged at irregular distances from one another with respect to the longitudinal extent of the positioning bridge (11), with, in order to grasp laminated glass sheets (17) of different widths, the distances between the gripping devices (14) becoming wider or narrower from one longitudinal edge (13) of the supporting table (2) to an opposite longitudinal edge (12).

5. Apparatus according to Claim 4, **characterized in that** the distances between the gripping devices (14) are matched to standard formats of laminated glass sheets (17).

6. Apparatus according to one of the preceding claims, **characterized in that** the gripping devices (14) have a lifting device (16) for raising the gripping device (14) above the level of a laminated glass sheet (17), with the result that the positioning bridge (11), with the gripping devices (14) raised, can move over the laminated glass sheet (17).

7. Apparatus according to Claim 6, **characterized in that** the lifting device (16) has a pneumatic or hydraulic piston-cylinder unit (18) or an electromotive adjusting device, which is arranged between a fastening device (19) and the rest of the gripping device (14).

8. Apparatus according to Claim 6 and/or Claim 7, **characterized in that** the gripping device (14) has an elongate gripper carrier (20), the gripper carrier (20) being connected to the lifting device (16) in a manner such that it can be raised and lowered, and the grippers (21, 22) being formed on the end side of the gripper carrier (20).

9. Apparatus according to one of the preceding claims, **characterized in that** the grippers (21, 22) each have an actuating device (24) for opening and closing the gripping mouths (25).

10. Apparatus according to Claim 9, **characterized in that** the actuating device (24) is a pneumatic or hydraulic piston-cylinder unit (24) or an electromotive adjusting unit (24).

11. Apparatus according to one of the preceding claims, **characterized in that** each gripper (21, 22) has its own actuating device (24).

12. Apparatus according to one of Claims 1 to 10, **characterized in that** the grippers (21, 22) of a gripping device (14) are actuated by a single actuating device (24).

13. Apparatus according to one of Claims 1 to 12, **characterized in that** the supporting table (2) has grooves (27) along its longitudinal extent flush with the path of movement of the gripping devices (14), for parts of the gripping devices (14) that are arranged below the level of a laminated glass sheet (17).

14. Apparatus according to one of Claims 1 to 13, **characterized in that** there are sensors (28) adjacent to the grippers (21, 22) on the gripping device (14), the sensors detecting a defined gripping depth, with the distance of the sensors (28) from the opening of the gripping mouths (25) being defined in such a manner that the gripping claws (23) of the grippers (21, 22) grasp a laminated glass sheet (17) only in edge regions (29) where the coating has been removed.

15. Apparatus according to one of the preceding claims, **characterized in that** a feeder unit (40) is arranged upstream of the supporting table (2) and can be used to convey a laminated glass sheet (17) onto the supporting table (2) until the laminated glass sheet (17) can be gripped by a gripper (21).

16. Method for positioning a laminated glass sheet (17) on a supporting table (2) of an apparatus according to one or more of the preceding claims using this apparatus, **characterized in that**, for displacement on the supporting table (2), the laminated glass sheet (17) is gripped successively both at its front edge region, which faces the laminated-glass-cutting installation (7), and at its rear edge region, which faces away from the laminated-glass-cutting installation (7), and is both pulled and pushed.

17. Method according to Claim 16, **characterized by** the following method steps:
a) using the front grippers (21) to grip the laminated glass sheet (17) at its rear edge region and sliding it along a conveying direction (30) under the cutting bridge (8), in particular until a glass pane surface comes to lie behind the cutting bridge (8), with respect to the conveying direction (30), the glass pane surface corresponding to a glass pane surface which is to be cut off,
b) pulling the laminated glass sheet (17) away from the cutting bridge (8) along an opposite conveying direction (31) by means of the positioning bridge with the front grippers (21) still acting on the laminated glass sheet (17),
c) moving the positioning bridge (11) over the laminated glass sheet (17) in the conveying direction (30) with respect to the cutting bridge (8), in which case, in particular, the entire gripping device (14) is raised by the lifting device (16),
d) using the rear grippers (22) to grip the laminated glass sheet (17) at its front edge region and to push it further along the opposite conveying direction (31) away from the cutting bridge (8).

18. Method according to Claim 17, **characterized in that**, prior to the positioning for cutting purposes, the laminated glass sheet (17) is first of all gripped at its front edge region by the rear grippers (22) and is pulled forward along the conveying direction (30) to the cutting bridge (8), and then the positioning bridge (11) is moved over the laminated glass sheet (17) in the opposite conveying direction (31), in which case, in particular, the entire gripping device (14) is raised by the lifting device (16).

19. Method according to one or more of Claims 16 to 18, **characterized in that** the gripping devices (14) are in each case lowered into the grooves (27) before gripping the laminated glass sheet (17).

## Revendications

1. Dispositif pour couper un panneau de verre de sécurité feuilleté (17)
- comprenant une table de support (2) pour la pose de panneaux de verre de sécurité feuilleté (17), qui présente deux côtés étroits (4, 6) se faisant face, dont un côté étroit (6) est un côté de coupe (6) et
- avec un dispositif de coupe de verre de sécurité feuilleté (7) qui présente un pont de coupe (8) s'étendant sur la largeur de la table de support (2) à la hauteur du côté de coupe (6), sur lequel est présent côté supérieur ou côté inférieur du panneau de verre de sécurité feuilleté (17) à traiter au moins un outil de coupe pour couper ou rayer le panneau de verre de sécurité feuilleté (17), et une table de traitement (9), qui est placée sur le côté de coupe (6),
- un pont de positionnement (11) disposé au-dessus de la table de support (2) et pouvant faire des allers et retours le long d'une direction longitudinale de table (10) de la table de support (2) dans le sens contraire au dispositif de coupe de verre de sécurité feuilleté (7), pour le déplacement et le positionnement du panneau de verre de sécurité feuilleté (17) sur la table de support (2) avec au moins un dispositif de préhension (14) muni d'au moins une pince (21) de serrage avant, dont la mâchoire de préhension (25) formée par ses griffes de préhension (23) et destinée à saisir le panneau de verre de sécurité feuilleté (17), située dans la zone de bordure arrière, opposée à l'installation de coupe du verre de sécurité feuilleté (7), est dirigée vers le pont de coupe (8),
**caractérisé en ce que**
sur le dispositif de préhension (14), est présente au moins une pince (22) arrière de serrage, dont la mâchoire de préhension (25) formée par ses griffes de préhension (23) part du pont de coupe (8), de sorte que le panneau de verre de sécurité feuilleté (17) peut être saisi également dans sa zone de bordure avant, tourné vers l'installation de coupe de verre de sécurité feuilleté (7) et peut être aussi bien tiré que poussé.

2. Dispositif selon la revendication 1,
**caractérisé en ce que** sur le pont de positionnement (11) est présente une pluralité de dispositifs de préhension (14), au moins une pince (21) avant de serrage et au moins une pince (22) arrière de serrage étant présentes sur le pont de positionnement (11) le long de l'extension longitudinale de la table de support (2) sur chaque dispositif de préhension (14).

3. Dispositif selon la revendication 1 ou 2,
**caractérisé en ce que**
les outils de coupe peuvent tourner librement ou de façon entraînée autour d'un axe perpendiculairement au sens de coupe et perpendiculairement au plan du panneau de verre de sécurité feuilleté et peuvent être déplacés le long du pont de coupe (8) transversalement au sens de transport d'un panneau de verre de sécurité feuilleté (17), de sorte que des contours de coupe quelconques peuvent être coupés.

4. Dispositif selon la revendication 2 et/ou 3,
**caractérisé en ce que**
les dispositifs de préhension (14) sont disposés avec des intervalles irréguliers entre eux par rapport à l'extension longitudinale du pont de positionnement (11), les espacements entre les dispositifs de préhension (14) allant d'une arête longitudinale (13) de la table de support (2) en direction d'une arête longitudinale (12) opposée devenant plus larges ou plus resserrés afin de saisir des panneaux de verre de sécurité feuilleté (17) de largeur différente.

5. Dispositif selon la revendication 4,
**caractérisé en ce que**
les espacements entre les dispositifs de préhension (14) sont adaptés au format standard de panneau de verre de sécurité feuilleté (17).

6. Dispositif selon l'une quelconque des revendications précédentes,
**caractérisé en ce que**
les dispositifs de préhension (14) présentent un dispositif de levage (16) pour l'élévation du dispositif de préhension (14) au-dessus du niveau d'un panneau de verre de sécurité feuilleté (17), de sorte que le pont de positionnement (11) peut franchir le panneau de verre de sécurité feuilleté (17) avec des dispositifs de préhension (14) relevés.

7. Dispositif selon la revendication 6,
**caractérisé en ce que**
le dispositif de levage (16) présente une unité piston-cylindre (18) pneumatique ou hydraulique ou un dispositif de déplacement par moteur électrique, qui est disposé entre un dispositif de fixation (19) et le dispositif de préhension (14) restant.

8. Dispositif selon la revendication 6 et/ou la revendication 7,
**caractérisé en ce que**
le dispositif de préhension (14) présente un support de pince (20) allongé, le support de pince (20) étant relié au dispositif de levage (16) de façon à pouvoir être soulevé et abaissé, les pinces (21, 22) étant réalisées côté extrémité sur le support de pince (20).

9. Dispositif selon l'une quelconque des revendications précédentes,
**caractérisé en ce que**
les pinces (21, 22) présentent chacune un dispositif d'actionnement (24) pour l'ouverture et la fermeture des mâchoires de préhension (25).

10. Dispositif selon la revendication 9,
**caractérisé en ce que**
le dispositif d'actionnement (24) est une unité piston-cylindre (24) pneumatique ou hydraulique ou une unité de positionnement (24) par moteur électrique.

11. Dispositif selon l'une quelconque des revendications précédentes,
**caractérisé en ce que**
chaque pince (21, 22) présente un dispositif d'actionnement (24) propre.

12. Dispositif selon l'une quelconque des revendications 1 à 10,
**caractérisé en ce que**
les pinces (21, 22) d'un dispositif de préhension (14) sont actionnées avec un seul dispositif d'actionnement (24).

13. Dispositif selon l'une quelconque des revendications 1 à 12,
**caractérisé en ce que**
la table de support (2) présente le long de son extension longitudinale, en alignement avec la trajectoire de déplacement des dispositifs de préhension (14), des rainures (27) pour des parties, disposées au-dessous du niveau d'un panneau de verre de sécurité feuilleté (17), des dispositifs de préhension (14).

14. Dispositif selon l'une quelconque des revendications 1 à 13,
**caractérisé en ce que**
à proximité des pinces (21, 22), sur le dispositif de préhension (14), sont présents des capteurs (28) qui présentent une profondeur de préhension définie, la distance des capteurs (28) à l'ouverture des mâchoires de préhension (25) étant définie de telle sorte que les griffes de préhension (23) des pinces (21, 22) saisissent un panneau de verre de sécurité feuilleté (17) seulement dans les zones de bordure (29) dont on a enlevé la couche.

15. Dispositif selon l'une quelconque des revendications précédentes,
**caractérisé en ce que**
la table de support (2) est disposée en amont d'une unité d'alimentation (40), avec laquelle un panneau de verre de sécurité feuilleté (17) peut être transporté sur la table de support (2) jusqu'à ce que le panneau de verre de sécurité feuilleté (17) soit saisi par une pince (21).

16. Procédé pour le positionnement d'un panneau de verre de sécurité feuilleté (17) sur une table de support (2) d'un dispositif selon l'une ou plusieurs des revendications précédentes avec l'utilisation de ce dispositif,
**caractérisé en ce que**
le panneau de verre de sécurité feuilleté (17) est saisi pour le déplacement sur la table de support (2), de façon successive aussi bien sur sa zone de bordure avant, tournée vers le dispositif de coupe de verre (7) que sur sa zone de bordure arrière, opposée au dispositif de coupe de verre (7) et est aussi bien tiré que poussé.

17. Procédé selon la revendication 16,
**caractérisé par** les étapes suivantes :
a)saisie du panneau de verre de sécurité feuilleté (17) avec les pinces (21) avant sur sa zone de bordure arrière et coulissement le long d'un sens de transport (30) sous le pont de coupe (8), en particulier jusqu'à ce que, par rapport au sens de transport (30), une surface de vitre, qui correspond à une surface de vitre à découper, arrive derrière le pont de coupe (8),
b) enlèvement du panneau de verre de sécurité feuilleté (17) du pont de positionnement avec les pinces (21) avant s'appliquant encore sur le panneau de verre de sécurité feuilleté (17) le long d'une contre-direction de transport (31) à partir du pont de coupe (8)
c) déplacement du pont de positionnement (11) au-dessus du panneau de verre de sécurité feuilleté (17) vers le pont de coupe (8) dans le sens de transport (30), en particulier l'ensemble du dispositif de préhension (14) étant soulevé avec le dispositif de levage (16)
d) saisie du panneau de verre de sécurité feuilleté (17) avec les pinces (22) arrière sur sa zone de bordure avant et poussée de celui-ci le long du contresens de transport (31) à partir du pont de coupe (8).

18. Procédé selon la revendication 17,
**caractérisé en ce que**
le panneau de verre de sécurité feuilleté (17) est saisi avant le positionnement pour la coupe d'abord avec les pinces (22) arrière sur sa zone de bordure avant et est agencé vers le pont de coupe (8) le long du sens de transport (30) et le pont de positionnement (11) est déplacé ensuite au-dessus du panneau de verre de sécurité feuilleté (17) dans le contresens de transport (31), l'ensemble du dispositif de préhension (14) étant soulevé avec le dispositif de levage (16).

19. Procédé selon l'une quelconque ou plusieurs des revendications 16 à 18,
**caractérisé en ce que**
les dispositifs de préhension (14) sont abaissés respectivement dans les rainures (27) avant la saisie du panneau de verre de sécurité feuilleté (17).
